# EUROPÄISCHE PATENTSCHRIFT

(11) **EP 2 540 616 B1**
(45) Veröffentlichungstag und Bekanntmachung des Hinweises auf die Patenterteilung: **01.03.2017**
(21) Anmeldenummer: 12173698.7
(22) Anmeldetag: 26.06.2012
(51) Int. Cl.: E05B 17/00, B64C 1/14

(54) **Schließmechanismus für eine mit Kraftunterstützung schließende Schiebetüre**
Closing mechanism for a sliding door that closes with power assistance
Mécanisme de fermeture pour portes coulissantes assistées

(30) Priorität: 27.06.2011 DE 202011102484 U
(43) Veröffentlichungstag der Anmeldung: 02.01.2013
(73) Patentinhaber: SACS GmbH, 72186 Empfingen (DE)
(72) Erfinder: Kuhm, Rolf, 71063 Sindelfingen (DE); Dratius, Oliver, 72458 Albstadt (DE)
(74) Vertreter: Patentanwälte Magenbauer & Kollegen Partnerschaft mbB

(56) Entgegenhaltungen:
- FR-A- 1 459 576
- FR-A1- 2 847 611
- US-A- 5 064 147

## Beschreibung

Die vorliegende Erfindung betrifft einen Schließmechanismus für eine mit Kraftunterstützung schließende Schiebetüre gemäß dem Oberbegriff des Patentanspruchs 1.

Aus dem Stand der Technik sind kraftunterstützte Schließmechanismen, z.B. für den Einsatz bei Flugzeug-Schiebetüren bekannt. Ein beispielhafter Schließmechanismus mit einem elektromotorischen Antrieb ist aus der US 6,186,444 B1 ersichtlich. Elektromotorisch betriebene Schließmechanismen sind in ihrem Aufbau relativ aufwendig und weisen gleichzeitig ein hohes Gewicht auf, was insbesondere für einen Einsatz in der Luftfahrt als nachteilig empfunden wird. Zusätzlich wird es als nachteilig empfunden, dass der elektromotorisch unterstützte Schließmechanismus im Falle eines Ausfalls der Stromversorgung nicht mehr vollständig einsatzfähig ist.

Aus der FR 2 847 611 A1 ist ein Schließmechanismus für eine mit Kraftunterstützung schließende Schiebetür mit einer Linearführung für ein Türblatt bekannt, bei dem zur Kraftunterstützung eine Gasdruckfeder vorgesehen ist, die zwischen der Linearführung und einer zu dieser in einem in Schließrichtung geöffneten ersten Winkel angeordneten Führungsschiene wirkt.

Es ist die Aufgabe der vorliegenden Erfindung ein Schließmechanismus für eine mit Kraftunterstützung schließende Schiebetüre mit einer Linearführung für ein Türblatt derart weiter zu bilden, dass ein zuverlässiger mechanischer Mechanismus mit einer günstigen Kraft-Weg-Kennlinie geschaffen wird.

Diese Aufgabe wird durch einen Schließmechanismus mit den Merkmalen des Patentanspruchs 1 gelöst.

Ein erfindungsgemäßer Schließmechanismus für eine mit Kraftunterstützung schließende Schiebetüre mit einer Linearführung für ein Türblatt weist zur Kraftunterstützung eine Gasdruckfeder auf, wobei die Gasdruckfeder zwischen der Linearführung und einer zu dieser in einem in Schließrichtung geöffneten Winkel angeordneten Führungsschiene wirkt.

Dadurch, dass die Linearführung und die Führungsschiene in einem in Schließrichtung geöffneten Winkel zueinander angeordnet sind, wird eine von der Gasdruckfeder erzeugte Kraftwirkung zwischen der Linearführung und der Führungsschiene in eine in Schließrichtung wirkende Kraftkomponente überführt, so dass eine Schließbewegung der Schiebetüre durch eine Entspannung der Gasdruckfeder unterstützt wird. Es kann auf diese Weise eine reine mechanisch ausgeführte Kraftunterstützung des Schließvorganges erreicht werden, die im Vergleich zu elektromotorisch betriebenen Einheiten einen einfachen Aufbau aufweist, zuverlässig ist und gleichzeitig ein geringeres Baugewicht als die elektromotorisch betriebenen Einheiten hat. Durch den Einsatz einer Gasdruckfeder wird außerdem erreicht, dass das System gegenüber Schließmechanismen die beispielsweise mit einer Schraubenfeder, die auf Zug oder Druck arbeitet, ausgestattet sind, eine Kraft-Weg-Kennlinie mit verbesserter Linearität aufweist.

Gleichwohl ist es möglich, die erfindungsgemäße Anordnung aus Gründen des Bedienungskomforts mit elektromotorisch betriebenen Schließmechanismen zu kombinieren. Bei einer solchen Kombination werden durch den Einsatz der erfindungsgemäßen Anordnung ausgeglichene Kraftverhältnisse für einen Öffnungs- und Schließvorgang erzielt. Der Elektromotor weist dadurch einen gleichmäßigen und ruhigeren Lauf auf, der insbesondere beim Öffnen der Türe durch dämpfende Eigenschaften der Gasdruckfeder bewirkt wird. Beim Anhalten wird außerdem das Gewicht der Türe durch die Gasdruckfeder gehalten und so eine Entlastung des Elektromotors erreicht.

Für den Einsatz in Flugzeugen, bei denen eine zu verschließende Türöffnung ein gewölbte Oberkante aufweist, ist es vorteilhaft, wenn die Linearführung in Schließrichtung schräg ansteigend angeordnet ist. Es wird auf diese Weise erreicht, dass eine an die gewölbte Oberkante der Türöffnung angepasste Schiebetüre von unten her in die Wölbung einfahren kann, womit ein vollständiges Schließen der Türe erreicht werden kann. Natürlich können aber auch Schiebtüren mit einer ausschließlich horizontal Bewegungsrichtung mit der erfindungsgemäßen Anordnung kraftunterstützt geschlossen werden.

Um eine Schließkraft des Schließmechanismus einstellbar zu machen und gleichzeitig beispielsweise an verschiedene Türgewichte anzupassen, ist es sinnvoll, wenn der Winkel zwischen der Linearführung und der Führungsschiene einstellbar ist. Durch eine Einstellung des Winkels zwischen der Linearführung und der Führungsschiene kann die Größe der in Schließrichtung wirkenden Kraftkomponente der durch die Ausdehnung der Gasdruckfeder erzeugten Kraft eingestellt werden. Insbesondere wenn die Linearführung in Schließrichtung schräg ansteigend angeordnet ist, ist es vorteilhaft, wenn die in Schließrichtung wirkende Kraft an das Gewicht der Schiebetüre, die in diesem Fall schräg aufwärts zu bewegen ist, auf diese Weise angepasst werden kann.

Eine besonders einfache Einstellung der in Schließrichtung wirkenden Kraft kann dadurch erreicht werden, dass der Winkel durch Veränderung eines zweiten Winkels, den die Führungsschiene mit der Horizontalen einschließt, einstellbar ist. Eine Ausgestaltung, bei der der Winkel, den die Führungsschiene mit der Horizontalen einschließt, veränderbar ist, ist insbesondere dann sinnvoll, wenn die Linearführung der Türe damit die Bewegung des Türblattes in einem bestimmten Winkel zu erfolgen hat.

Um eine erhöhte Stabilität der Linearführung der Schiebetüre zu erreichen kann es außerdem sinnvoll sein, wenn die Linearführung zwei parallel angeordnete Schienen aufweist. Insbesondere dann ist es sinnvoll den Winkel der Linearführung und der Führungsschiene relativ zueinander durch eine Veränderung des Winkels der Führungsschiene einzustellen.

Eine besonders günstige Ausgestaltung wird erreicht, wenn die Gasdruckfeder zwischen einem Schlitten, der auf der Linearführung läuft und an dem das Türblatt angeordnet ist, und einem Führungswagen, der auf der Führungsschiene läuft, angeordnet ist. Durch eine Anordnung der Gasdruckfeder zwischen dem Schlitten und dem Führungswagen, die beide bevorzugt kugelgelagert auf der Linearführung bzw. der Führungsschiene laufen, wird eine besonders leichtgängige Anordnung erreicht, die außerdem eine geringe Störanfälligkeit aufweist.

Aufgrund des Winkels zwischen der Linearführung und der Führungsschiene wirkt auf die zwischen dem Schlitten und dem Führungswagen angeordnete Gasdruckfeder ein Drehmoment. Um dieses Drehmoment abzufangen und damit ein Verkanten des Schlittens oder des Führungswagens zu verhindern und gleichzeitig die Standzeit der Gasdruckfeder zu erhöhen ist es sinnvoll, wenn parallel zu der Gasdruckfeder eine Entlastungsschiene zwischen dem Schlitten und dem Führungswagen angeordnet ist.

Die Entlastungsschiene ist dabei bevorzugt an dem Schlitten verschiebbar gelagert, so dass die Entlastungsschiene Vergrößerungen bzw. Verkleinerungen des Abstandes zwischen der Linearführung und der Führungsschiene, wie sie beim Öffnen und Schließen der Schiebetüre auftreten, parallel zu der Gasdruckfeder ausführen kann.

Eine präzise Festlegung des Winkels der Führungsschiene relativ zu der Linearführung kann dadurch erreicht werden, dass an der Führungsschiene eine Einstellschraube vorgesehen ist.

Eine Befestigung der Führungsschiene in verschiedenen Winkelpositionen ist besonders einfach erreichtbar, wenn die Führungsschiene zur Befestigung Langlöcher aufweist.

Versuche haben ergeben, dass eine besonders günstige Ausgestaltung des Schließmechanismus dann erreicht wird, wenn der erste Winkel einen Wert zwischen 25° und 35° und/oder der zweite Winkel einen Wert zwischen 0° und 10° aufweist.

Die vorliegende Erfindung wird nachfolgend anhand eines Ausführungsbeispiels unter Bezugnahme auf die beigefügten Figuren eingehend erläutert.

Es zeigt:
- Figur 1: einen erfindungsgemäßen Schließmechanismus und
- Figur 2: den Schließmechanismus aus Figur 1 mit daran angeordnetem Türblatt.

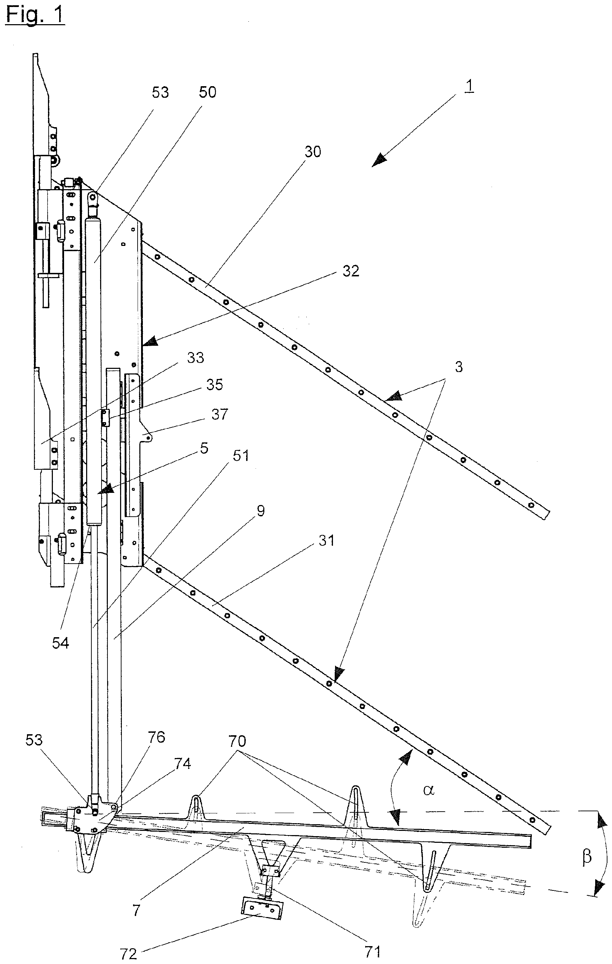

Figur 1 zeigt einen erfindungsgemäßen Schließmechanismus 1 für eine mit Kraftunterstützung schließende Schiebetüre, wobei eine Linearführung 3 für einen Schlitten 32 an dem ein Türblatt 10, 11 angeordnet werden kann, durch zwei parallel verlaufende Schienen 30, 31 gebildet ist.

An dem Schlitten 32 ist vorderseitig, d.h. in Schließrichtung orientiert eine Aufhängung 33 zur Anbringung eines Türblattes 10, das in der vorliegenden Darstellung nicht gezeigt ist, angeordnet.

Rückseitig weist der Schlitten 32 eine Verschlussnase 37 auf, die geeignet ausgebildet ist, die Türe in geöffnetem Zustand in Zusammenwirkung mit einer Verriegelung 16 geöffnet zu halten.

Als weitere Komponente des Schließmechanismus 1 ist eine Führungsschiene 7 vorgesehen, die mit den parallel verlaufenden Schienen 30, 31 der Linearführung 3 einen ersten Winkel α einschließt. Zwischen dem Schlitten 32, der auf der Linearführung 3 läuft, und einem Führungswagen 74, der auf der Führungsschiene 7 läuft, ist eine Gasdruckfeder 5 angeordnet. An ihren beiden Enden ist die Gasdruckfeder 5 über Lagerösen 53 mit dem Schlitten 32 einerseits und dem Führungswagen 74 andererseits verbunden. Die Lagerung der Gasdruckfeder 5 erfolgt sowohl vorder- als auch rückseitig drehmomentfrei durch Lagerbolzen, die durch die Lagerösen 53 geführt sind. Um eine Kopplung zwischen dem Schlitten 32 und dem Führungswagen 74 zu erreichen ist eine Entlastungsschiene 9 vorgesehen, die an dem Führungswagen 74 über eine Aufnahme 76 gelenkig gelagert und in dem Wagen 32 linear verschiebbar über eine Lagerung 35 gehalten ist. Auf diese Weise wird erreicht, dass durch Öffnungs- und Schließvorgänge zwischen dem Schlitten 32 und dem Führungswagen 74 wirkende Drehmomente durch die Entlastungsschiene 9 übertragen bzw. aufgenommen werden und so Drehmomente auf die Gasdruckfeder 5 vermieden werden. Solche Drehmomente würden an der Gasdruckfeder 5 insbesondere zwischen einem Zylinder 50 und einer Kolbenstange 51 angreifen und damit auf eine zwischen dem Zylinder 50 und der Kolbenstange 51 angeordnete Dichtung wirken, wo sie schlussendlich zur Undichtigkeit der Gasdruckfeder 5 führen würden. Dieser Effekt wird durch die Entlastung 9 vermieden.

Der erste Winkel α, in dem die Führungsschiene 7 relativ zu den Schienen 30, 31 der Linearführung angeordnet ist, bestimmt, in welchem Anteil eine von der Gasdruckfeder 5 senkrecht zur Schließrichtung ausgeübte Kraftkomponenten in Schließrichtung überführt wird. Insbesondere, wenn die Schienen 30, 31 der Linearführung 3, wie im vorliegenden Ausführungsbeispiel dargestellt, in Schließrichtung schräg nach oben verlaufend angeordnet sind, kann durch eine Veränderung des ersten Winkels α zwischen der Linearführung 3 und der Führungsschiene 7 eine in Schließrichtung wirkende Kraftkomponenten eingestellt werden.

Die Schienen 30, 31 der Linearführung 3 sind im vorliegenden Ausführungsbeispiel parallel zueinander angeordnet und durch eine Vielzahl von Schrauben oder Nieten an einer parallel zur Schließebene verlaufenden Wandung fixiert. Die Linearführung ist damit in ihrer Ausrichtung unveränderlich.

Eine einfache Einstellung des ersten Winkels α zwischen der Linearführung 3 und der Führungsschiene 7 kann, wie in Figur 1 gezeigt, dadurch erreicht werden, dass ein zweiter Winkel β, den die Führungsschiene 7 mit der Horizontalen einschließt verändert wird. Die Führungsschiene 7 ist dazu über einen Lagerbock 72 und eine Einstellschraube 71 ebenfalls an der Wandung befestigt. Die Einstellschraube 71 wirkt parallel zu der Wandung und in Richtung der Führungsschiene 7, so dass durch eine Drehung der Einstellschraube 71 der zweite Winkel β einstellbar ist. Zur Fixierung der Führungsschiene 7 an der Wandung sind an der Führungsschiene 7 laschenförmige Anformungen vorgesehen, die zweckmäßiger Weise Langlöcher 70 aufweisen. Über die Langlöcher 70 ist eine Veränderung der Führungsschiene 7 vornehmbar und anschließend besonders einfach fixierbar.

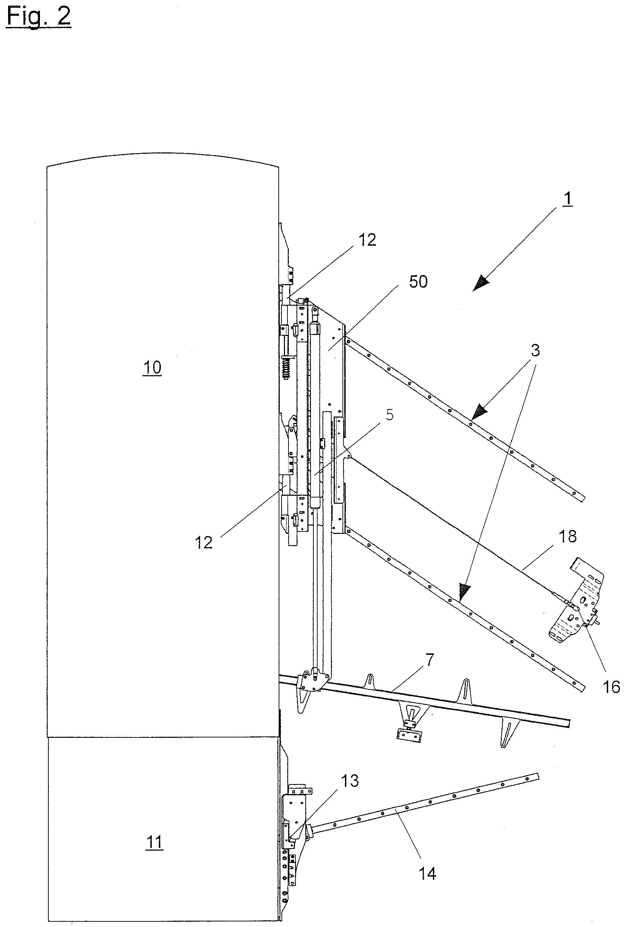

Figur 2 zeigt den Schließmechanismus 1 aus Figur 1, wobei in dem in Figur 2 gezeigten Ausführungsbeispiel an der Aufhängung 33 ein Türblattoberteil 10 sowie zusätzlich ein Türblattunterteil 11 mit einer zugehörigen Lagerung über eine Unterschiene 14 sowie einen Unterschlitten 13 dargestellt sind.

Da in Flugzeugen oftmals beengte Raumverhältnisse im Inneren der Kabine herrschen, kann es notwendig sein, eine Schiebetüre, die eine Türöffnung mit einer gewissen Raumhöhe verschließt in einem Raum unterzubringen, der eine geringere Bauhöhe aufweist als dies die Bauhöhe der Türöffnung zulassen würde. Für solchen Anforderungen sind Schiebetüren bekannt, bei denen das Türblattunterteil 11 beim Öffnen der Türe im Türblattoberteil 10 aufgenommen wird, so dass in geöffnetem Zustand eine geringere Bauhöhe der Türe erreicht wird, wobei gleichzeitig bei geschlossener Türe eine einheitliche Oberfläche gegeben ist.

Im vorliegenden Ausführungsbeispiel ist das Türblattunterteil 11 über den Unterschlitten 13 an der Unterschiene 14 gelagert und wird, wie dargestellt, bei einem Öffnen der Türe, d.h. bei Bewegung des Türblattes nach rechts über die in Öffnungsrichtung ansteigende Unterschiene 14 nach oben, d.h. ins Innere des in diesem Bereich hohl ausgeführten Türblattoberteils 10 bewegt. Gleichzeitig wird bei einem Öffnen der Türe des Türblattoberteil 10 durch die in Öffnungsrichtung nach unten geneigte Linearführung 3 nach unten bewegt, so dass insgesamt ein vollständiges Aufnehmen des Türblattunterteils 11 im Türblattoberteil 10 erreicht wird.

Im vorliegenden Ausführungsbeispiel ist die Unterschiene 14 aus Platzgründen in Öffnungsrichtung schräg ansteigend angeordnet. Die Unterschiene 14 kann, sofern dies der vorhandene Stauraum in der Trennwand zulässt, auch horizontal verlaufend angeordnet sein

Zusätzlich zu dem in Figur 1 dargestellten Schließmechanismus 1 ist in Figur 2 außerdem eine Verriegelung 16 gezeigt, mit Hilfe derer der Schließmechanismus 1 in Zusammenwirkung mit der Verschlussnase 37 in geöffneter Stellung arretierbar ist. Über einen Seilzug 18 kann die Verriegelung 16 geöffnet werden, so dass die Türe dann durch die Gasdruckfeder 5 kraftunterstützt entweder selbstständig schließt oder zumindest vereinfacht geschlossen werden kann.

### Bezugszeichenliste

- 1: Schließmechanismus
- 3: Linearführung
- 5: Gasdruckfeder
- 7: Führungsschiene
- 9: Entlastungsschiene
- 10: Türblattoberteil
- 11: Türblattunterteil
- 12: Scharnier
- 13: Unterschlitten
- 14: Unterschiene
- 16: Verriegelung
- 18: Seilzug
- 30: Schiene (obere)
- 31: Schiene (untere)
- 32: Schlitten
- 33: Aufhängung
- 35: Lagerung
- 37: Verschlussnase
- 50: Zylinder
- 51: Kolbenstange
- 53: Lageröse
- 54: Dichtung
- 70: Langlöcher
- 71: Einstellschraube
- 72: Lagerbock
- 74: Führungswagen
- 76: Aufnahme

- α: erster Winkel
- β: zweiter Winkel

## Patentansprüche

1. Schließmechanismus (1) für eine mit Kraftunterstützung schließende Schiebetüre, mit einer Linearführung (3) für ein Türblatt (10, 11), bei demzur Kraftunterstützung eine Gasdruckfeder (5) vorgesehen ist, die zwischen der Linearführung (3) und einer zu dieser in einem in Schließrichtung geöffneten ersten Winkel (α) angeordneten Führungsschiene (7) wirkt,
**dadurch gekennzeichnet, dass** der erste Winkel (α) durch Veränderung eines zweiten Winkels (β), den die Führungsschiene (7) mit der Horizontalen einschließt, einstellbar ist und dass eine Einstellschraube (71) zur Festlegung des zweiten Winkels (β) der Führungsschiene (7) vorgesehen ist.

2. Schließmechanismus (1) nach Anspruch 1,
**dadurch gekennzeichnet, dass** die Linearführung (3) in Schließrichtung schräg ansteigend angeordnet ist.

3. Schließmechanismus (1) nach einem der vorhergehenden Ansprüche,
**dadurch gekennzeichnet, dass** die Linearführung (3) zwei parallel angeordneten Schienen (30, 31) aufweist.

4. Schließmechanismus (1) nach einem der vorhergehenden Ansprüche,
**dadurch gekennzeichnet, dass** die Gasdruckfeder (5) zwischen einem Schlitten (32), der auf der Linearführung (3) läuft und an dem das Türblatt (10, 11) anordenbar ist, und einem Führungswagen (74), der auf der Führungsschiene (7) läuft, angeordnet ist.

5. Schließmechanismus (1) nach einem der vorhergehenden Ansprüche,
**dadurch gekennzeichnet, dass** die Führungsschiene (7) zur Befestigung Langlöcher (70) aufweist.

6. Schließmechanismus (1) nach einem der vorhergehenden Ansprüche,
**dadurch gekennzeichnet, dass** der erste Winkel (α) zwischen 25° und 35° und/oder der zweite Winkel (β) zwischen 0° und 10° beträgt.

## Claims

1. Closing mechanism (1) for sliding doors which close with power assistance, having a linear guide (3) for a door leaf (10, 11), wherein a gas spring (5) is provided for power assistance, which operates between the linear guide (3) and a guide rail (7) which is arranged relative to this at a first angle (α) which is open in the closing direction, **characterised in that**
the first angle (α) can be adjusted by changing a second angle (β) which the guide rail (7) forms with the horizontal, and an adjusting screw (71) is provided to set the second angle (β) of the guide rail (7).

2. Closing mechanism (1) according to claim 1,
**characterised in that**
the linear guide (3) is arranged to ascend diagonally in the closing direction.

3. Closing mechanism (1) according to one of the preceding claims,
**characterised in that**
the linear guide (3) has two rails (30, 31) which are arranged in parallel.

4. Closing mechanism (1) according to one of the preceding claims,
**characterised in that**
the gas spring (5) is arranged between a slide (32), which runs on the linear guide (3) and is able to be arranged on the door leaf (10, 11), and a guide carriage (74) which runs on the guide rail (7).

5. Closing mechanism (1) according to one of the preceding claims,
**characterised in that**
the guide rail (7) has elongated holes (70) for attachment.

6. Closing mechanism (1) according to one of the preceding claims,
**characterised in that**
the first angle (α) is between 25° and 35° and/or the second angle (β) is between 0° and 10°.

## Revendications

1. Mécanisme de fermeture (1) destiné à une porte coulissante à fermeture assistée comprenant un guidage linéaire (3) d'un vantail de porte (10, 11), dans lequel, pour permettre l'assistance, il est prévu un ressort pneumatique (5) qui agit entre le guidage linéaire (3) et un rail de guidage (7) faisant avec celui-ci selon un premier angle (α) ouvert dans la direction de la fermeture,
**caractérisé en ce que**
le premier angle (α) peut être réglé en modifiant un second angle (β) qui correspond à l'angle du rail de guidage (7) avec l'horizontale, et il est prévu une vis de réglage (71) pour permettre de régler le second angle (β) du rail de guidage (7).

2. Mécanisme de fermeture (1) conforme à la revendication 1, **caractérisé en ce que**
le guidage linéaire (3) monte de façon oblique dans la direction de fermeture.

3. Mécanisme de fermeture (1) conforme à l'une des revendications précédentes,
**caractérisé en ce que**
le guidage linéaire (3) comprend deux rails parallèles (30, 31).

4. Mécanisme de fermeture (1) conforme à l'une des revendications précédentes,
**caractérisé en ce que**
le ressort pneumatique (5) s'étend entre un coulisseau (32) mobile sur le guidage linéaire (3) et sur lequel peut être monté le vantail de porte (10, 11) et un chariot de guidage (74) mobile sur le rail de guidage (7).

5. Mécanisme de fermeture (1) conforme à l'une des revendications précédentes,
**caractérisé en ce que**
le rail de guidage (7) comprend des trous de fixation longitudinaux (70).

6. Mécanisme de fermeture (1) conforme à l'une des revendications précédentes,
**caractérisé en ce que**
le premier angle (α) est situé entre 25° et 35° et/ou le second angle (β) est situé entre 0° et 10°.
